# EUROPEAN PATENT SPECIFICATION

(11) **EP 4 492 964 B1**
(45) Date of publication and mention of the grant of the patent: **10.12.2025**
(21) Application number: 23712232.0
(22) Date of filing: 17.03.2023
(51) Int. Cl.: A01G 9/14, A01G 9/08

(54) **SYSTEM FOR HANDLING A WORKING HEAD IN A VERTICAL FARMING FACILITY**
SYSTEM ZUR HANDHABUNG EINES ARBEITSKOPFES IN EINER VERTIKALLANDWIRTSCHAFTSANLAGE
SYSTÈME DE MANIPULATION D'UNE TÊTE DE TRAVAIL DANS UNE INSTALLATION AGRICOLE VERTICALE

(30) Priority: 17.03.2022 EP 22162784
(43) Date of publication of application: 22.01.2025
(73) Proprietor: suiteg GmbH, 50858 Köln (DE)
(72) Inventor: RYBAK, Vasyl, Kiev, 04119 (UA); VESPER, Martin, 42399 Wuppertal (DE); DECKERS, Volker, 52538 Gangelt (DE)
(74) Representative: Kutzenberger Wolff & Partner
(86) International application number: PCT/EP2023/056868
(87) International publication number: WO 2023/175134

(56) References cited:
- FR-A1- 3 098 083
- US-A1- 2002 088 173
- US-B1- 10 407 243

## Description

### Background

The present invention relates to a system for handling a working head in a vertical farming facility, wherein plants can be cultivated. Traditionally, plants are grown by farmers by way of field cultivation. For this purpose, specific atmospheric conditions are indispensable for successful cultivation. In particular, the soil must be rich in humus and hence provide sufficient amounts of nutrients. Furthermore, the soil as well as the ambient air must provide enough humidity so as to promote plant growth. Moreover, adequate radiation must be ensured. In addition and importantly, plant cultivation is inextricably linked to a provision of sufficient acreage.

The global population and therefore the demand for sufficient food is increasing incessantly. At the same time - among others due to anthropogenic industrial emissions and other human interferences in the natural planetary systems over the course of globalization - the climate is subject to long-term changes, especially to unfavorable changes from the standpoint of plant cultivation: Heat waves and water scarcity, but also a lack of soil nutrients as a consequence of monocultural farming et cetera are some of the challenging phenomena and examples for the deterioration of cultivation conditions that farmers are currently faced with and most likely will be confronted with on a regular basis in the future. According to scientific disclosures the adverse agricultural conditions will subsist and the challenging phenomena will occur even more frequently, when steady, predictable and controllable cultivation conditions are actually required for optimal agricultural outputs.

One approach in solving this problem can be found in the so-called inhouse or vertical farming technologies of growing crops in vertically stacked layers arranged inside buildings, containers or the like. This technology incorporates controlled-environment agriculture in order to optimize plant growth and to increase crop yield and goes along with a smaller cropland. Furthermore, vertical farming enables a decrease of human interference in the cultivation process due to automatization which increases the overall performance since machines don't need sleep or vacation and are not affected by sentiment fluctuations and thus are much less prone to errors. Automatization is expected to increase over time along with developments in machine learning and artificial intelligence. Also, vertical farming goes hand in hand with the benefit of reducing transportation efforts since the cultivation can be carried out in urban territories, close to consumers, thereby rendering pollutive and costly shipments superfluous. However, a current drawback of this approach is that vertical farming is associated with a tremendous energy consumption compared to classical field cultivation due to the fact that lighting, climate control and nutrients must be provided entirely by technical means. Consequently, vertical farming can only be a solution to the afore-mentioned challenges when energy consumption and costs are reduced and degree of automation as well as crop yield are increased significantly.

Established systems are disclosed in FR 3 098 083 A1, US 10 407 243 B1, US 2002/088173 A1 and NL 2 022 411 B1.

### Disclosure of the invention

It is an object of the present invention to provide a system that addresses at least some of the above-mentioned challenges and drawbacks.

The object of the present invention is achieved by a facility according to claim 1.

According to the present invention, it is advantageously possible to transfer plants and/or plant receptacles to designated positions within a vertical farming facility, such as a container or a greenhouse. The inventive system comprises a cantilever and a beam, wherein the cantilever itself can be seen as a specific type of beam. The cantilever and the beam feature different spatial alignments in order to increase range of motion of the system. Either one can be characterized by a main body that can be made of a single metal, steel or another alloy for an increase in strength and/or hardness. They can have a variety of cross sections and be formed, for instance, as double-T beams. But other materials as well as other cross sections are also conceivable, for instance to save money or increase quality and/or longevity of the employed parts. It is further conceivable that the cantilever and the beam have each a main extension direction with a cantilever axis and a beam axis, wherein their cross sections, if needed, are non-constant along their main extension direction. In other words, the cantilever and the beam can each comprise multiple sections, the multiple sections having different profiles or cross sections. The cantilever and the beam can have a telescopic design and therefore be variable in length. Such a system with two non-parallel constituents, both having a different orientation in space, can facilitate operation by enabling transportation of plants and/or plant receptacles to a myriad of positions within the vertical farming facility. An eventual relative motion between the cantilever and the beam can increase the utility of the system by enhancing its agility or so to say flexibility. Furthermore, the movability of the beam relative to the cantilever can increase the energy efficiency of the system since situationally, it can be sufficient to move solely the beam rather than the entire system. Moreover, a gripper that is movably attached to the beam can comprise multiple arms that are rotatably connected to each other which in turn raises the flexibility of the system by increasing the number of degrees of freedom of the system. Also, multiple arms enable the system to seize plants and/or plant receptacles round corners. The invention can ensure a compact design and therefore take up little installation and working space.

The working head can be a multitude of working elements that are interchangeably usable. For instance, the working head can be designed as a gripper head, the most distal component of the gripper, that ensures firm connection to the plants and/or plant receptacles and their transport from one spot to another within the vertical farming facility. The working head can also be a sensor, such as a camera that detects a color, shape, size, degree of ripeness of the plants etc. Furthermore, the working head can be a sprayer that can spray a liquid or a gas, for instance in order to promote growth, health and longevity of the plants or avoid unfavorable phenomena such as decomposition or the propagation of germs. It is also conceivable that the working head comprises a cleaning unit and/or an electro-stimulant unit for promoting plant growth by means of electrical impulses. It is further conceivable that the working head is a touching unit that promotes growth of the plants by means of physical contact with the plants. The entirety of working elements can be stored in a dedicated toolbox from which the needed working element can be taken and installed at the gripper. The installation of the working head can be carried out fully automatically by the system or manually by a technician or a combination thereof. After operation the respective working head can be placed back and stored in the toolbox.

According to the present invention, the cantilever comprises a first free end section and a first connecting end section and, preferably, the beam comprises a second free end section and a second connecting end section, wherein the beam is connected via the second connecting end section to the cantilever. The cantilever and the beam can be formed advantageously in an elongated manner, each one comprising exactly two end sections. The end sections can be defined, for instance, as the last 10% or 20% or 30% in terms of length with respect to the entire length of the cantilever and the beam. The end sections, particularly the connecting end sections, can be used advantageously for connecting other bodies or devices onto them that might be necessary for operation of the system, such as pedestal bearings that enable motion of the system along a desired motion path. The end sections can comprise exterior surfaces, internal volumes and especially end faces, the end faces being preferably arranged perpendicular to adjacent surfaces. The free end sections can be free in terms of without attachment to a surrounding body, thus movable through space, but the free ends can also be connected to an ambient object and hence fixed in space. It is furthermore conceivable for the free end sections to be fixed to an adjacent item at least partially and still be movable through space.

According to the invention, the vertical farming facility comprises a first facility wall to which the cantilever is connected via the first connecting end section, the cantilever being perpendicular and translationally movable with respect to the first facility wall. A length of the cantilever, along the cantilever axis, can be such that a largest possible area of the vertical farming facility can be reached by the system. Advantageously, the length of the cantilever is almost equal or equal to a width of the vertical farming facility, or even slightly longer than the said width of the vertical farming facility, the cantilever axis being parallel to the aforesaid width of the vertical farming facility. The area of the vertical farming facility is preferably rectangular but not restricted to a rectangle. A cantilever that is arranged perpendicularly to the first facility wall and is configured to be movable in a direction perpendicular to the cantilever axis then can cover the entire area of the vertical farming facility. Such a system advantageously requires only a simple electronic control unit since the necessity of complex movements is eliminated or at least reduced and the cantilever only needs to be moved along two opposite directions of one single axis.

According to an embodiment of the present invention, the cantilever is connected to the first facility wall by means of a first wall rail. Preferably, the first wall rail is straight along a main extension direction of the first wall rail and parallel to the first facility wall, while the first wall rail is firmly connected to the first facility wall. Furthermore, different cross sections are conceivable for the first wall rail. Advantageously, the cross section of the first wall rail is configured such that a form fit between the first wall rail and the first connecting end section is formed. The form fit can prevent a detachment of the cantilever from the first wall rail. It is conceivable that the first wall rail comprises a C-shape cross section, similar to common household curtain rails wherein three sides of a rectangle are closed and the fourth side is only partly, especially in a middle section, open. As compared with a curtain rail, wherein the partly open side is facing downwards, along a vertical direction, the first wall rail can be rotated by a 90-degree angle so that the partly open side of the cross section is directed sidewards, along a horizontal direction, especially parallel to the cantilever axis. The first wall rail can such be attached to, for instance bolted to, the first facility wall. In this manner, the cantilever can be detachably or non-detachably connected to the first wall rail. It is also conceivable to form a combination of form fit and force fit between the first wall rail and the first connecting end section. Such an embodiment can be found for example on either side of a drawer wherein two - with respect to their shape - corresponding and/or complementary rails slide along each other by means of balls or pellets and optionally a lubricant such as grease.

In a preferred embodiment of the present invention, the cantilever comprises a first guiding rail that is arranged parallel to the cantilever axis, the beam being translationally movable along the first guiding rail. The first guiding rail can be a separate component and connected advantageously at an upper surface of the cantilever. It is also conceivable to connect the first guiding rail to a lateral surface of the cantilever. Furthermore, the first guiding rail can be formed as a single piece with the cantilever. For instance, the cantilever can be manufactured of an elongated metal block, for instance one that comprises aluminum, wherein an appropriate shape can be milled, so to speak carved out, the said shape serving as a rail. Alternatively, the cantilever can be manufactured by casting, wherein the end product, the cantilever, comprises a rail-like elongated notch. In addition, the first guiding rail comprises, preferably, in the first free end section as well as first connecting end section, limiters that prevent the beam, that can be moved along the first guiding rail, on either side from exceeding a certain position along the first guiding rail. That way, the beam can be guided safely without the risk of derailing on one of the ends of the cantilever. It is conceivable that such limiters can be formed as a single piece with the cantilever as well.

According to an option of the invention, the cantilever is pivotably connected to a first facility wall. Pivoting the cantilever can render the necessity of linearly moving the cantilever superfluous. The cantilever can be rotatably fixed at the first connecting end section, for instance to the first facility wall or a facility ground, for instance by means of a hinge joint, and be pivoted back and forth like a door or a windshield swiper of an automobile. That way, a large area of the vertical farming facility can be served in general or supplied with plants and/or plant receptacles in particular. The supplied area advantageously correlates with the length of the cantilever, wherein a facility width, for instance embodied by a second facility wall, delimits the length of the cantilever.

In a preferred embodiment of the present invention, the beam comprises a second guiding rail that is arranged parallel to the beam axis, the gripper being movable along the second guiding rail. The above-mentioned effects and advantages of the first guiding rail, while considering the different orientations of the beam and the cantilever, also apply to the second guiding rail. The second guiding rail can be a separate component and connected to a lateral surface of the beam. It is conceivable for the second guiding rail to be formed as a single piece with the beam. For instance, the beam can be manufactured, analogously to the cantilever, of an elongated metal block, for instance one that comprises aluminum, wherein an appropriate shape can be milled that serves as a rail. Alternatively, the beam can be manufactured by casting, wherein the end product, the beam, comprises a rail-like elongated notch. In addition, the second guiding rail comprises, preferably, on both sides, in the second free end section as well as the second connecting end section, limiters that prevent the gripper, that can be moved along the second guiding rail, on either side from exceeding a certain position. That way, the gripper can be guided safely without the risk of derailing on one of the sides of the beam. It is conceivable that such limiters can be formed as a single piece with the beam as well. The gripper can be connected to the second guiding rail by means of a base member that can form a most proximal part of the gripper.

According to an embodiment of the present invention, the vertical farming facility comprises, preferably vertically arranged, planting walls, the planting walls comprising grooves and/or openings wherein the plants and/or plant receptacles are insertable. Planting walls can be used bilaterally by inserting plants or plant receptacles on either side of each wall. Plants and/or plant receptacles can be inserted into and removed from the planting walls at different heights and along entire widths of the walls in order to optimally use the wall area for plant cultivation. The plants or plant receptacles can be deployed in dedicated openings in the planting walls, wherein the openings can be characterized by a multitude of cross sections, such as rectangular, circular or oval. Alternatively, the plants and/or plant receptacles can be inserted in grooves that extend at different heights horizontally, parallel to the facility ground, or vertically, perpendicular to the facility ground. The plants and/or plant receptacles can be mechanically stabilized, particularly by a foam material that is arranged in, on or around the openings, or grooves, or a combination thereof. Plants and plant receptacles can be inserted preferably with a tilt, in other words, in an inclined position relative to the respective planting walls. It is furthermore conceivable and preferred that the planting walls are designed such that a liquid flows through them, providing the plants with a nutrient solution. In such an embodiment of the invention, the plant receptacles can comprise recesses so that the nutrient solution is distributed to the plants advantageously.

According to an embodiment of the present invention, the cantilever is movable within a plane that is arranged beneath the planting walls. Advantageously, the planting walls are arranged such that they are floating in the vertical farming facility. The planting walls can be, for instance, connected to a facility ceiling or a facility wall. Preferably, the planting walls are equal in dimensions and geometry and arranged all on a same height. Particularly preferred is a vertical distance between the facility ground and a lower edge of the planting walls that is greater than a vertical dimension of the cantilever. That way the cantilever can be moved underneath the planting walls without colliding with them. Regardless of how the cantilever is attached to the wall, rotatably or linearly movable, the cantilever can be thus moved without any impediments.

According to an embodiment of the present invention, the planting walls are individually movable, preferably along an axis parallel to the cantilever axis. By means of movable planting walls, a more compact facility can be built and used. Preferably, all planting walls are arranged parallel to each other. In a particularly preferred embodiment of the invention, all planting walls can be moved towards each other while keeping parallelism until they are almost in physical touch, without damaging the plants and/or plant receptacles by squeezing them between the planting walls. Then, one or a packet of planting walls can be moved apart such that only two planting walls are distinctly distanced apart from each other, the two said planting walls building an alley in-between them. Such a configuration necessitates less space so that smaller vertical farming facilities can be built by means of movable planting walls. It is also conceivable that the planting walls are parallelly slidable with respect to each other, in other words by keeping their respective perpendicular distance to each other. The general movability of the planting walls can help optimize the motion of the system, especially the gripper head, for instance by decreasing the distance between a targeted planting wall and the gripper head. Preferably, the planting walls are movable along an axis parallel to the cantilever axis. In such a configuration, the cantilever can be arranged, for instance, beneath all planting walls at the same time. Lateral movement of the cantilever then can serve each planting wall along its entire width.

In a preferred embodiment of the present invention, the beam is at least partly transportable between the planting walls. At least two different arrangements are conceivable. Firstly, the cantilever can be arranged parallel to the planting walls and longer than a main length of the planting walls. In other words, the cantilever can protrude the planting walls at least partly. The inserting of plants and/or plant receptacles into the planting walls can begin starting from a configuration in which the beam can be arranged at the first free end section of the cantilever that protrudes the planting walls. The cantilever then can be moved laterally/perpendicularly to the cantilever axis to a position in-between two specific planting walls without the beam colliding with a planting wall. Once the cantilever is located at a targeted position, the beam then can be moved along the cantilever axis towards the first connecting end section of the cantilever. That way, it is advantageously possible for the gripper, that is connected to the beam, to serve in an alley the two planting walls or at least one side of each planting wall that face the gripper at the targeted position. After having fully served the one side of each planting wall, the beam can be driven back to the first free end section of the cantilever. Finally, the cantilever can be moved further, perpendicularly to the cantilever axis, in an adjacent alley and the inserting of the plants and/or plant receptacles can start anew by moving the beam along the cantilever axis. Secondly, the cantilever can be arranged perpendicularly to the planting walls. It is conceivable that the inserting of the plants and/or plant receptacles into the planting walls can begin starting from a configuration in which the beam is arranged at the first connecting end section of the cantilever. Moving the cantilever perpendicularly to the cantilever axis then will ensure parallel motion of the beam/gripper with respect to at least one planting wall. Once the targeted planting walls are fully served, the cantilever can be moved backwards and parallel to the main length of the planting walls and even further than an end of the planting walls so that the cantilever and the planting walls have no overlapping in a top view. Then, the beam along with the gripper can be moved along the cantilever axis to a next position without the beam colliding with a planting wall. The inserting can start anew by moving the cantilever perpendicularly to the cantilever axis and parallel to and in-between two planting walls, meaning in a next alley. In the first above-mentioned arrangement, the inserting of plants and/or plant receptacles occurs while the position of the cantilever is fixed and the beam is in motion, whereas in the second arrangement, the inserting of plants/receptacles occurs while the position of the beam with respect to the cantilever is fixed and the cantilever is in motion.

Preferably, the cantilever comprises a supporting element, preferably a wheel, that is rotatably connected to the first free end section, the supporting element supporting the cantilever, preferably with respect to a facility ground. The cantilever can be connected to a facility wall such that it hovers only slightly above the facility ground. It is conceivable that the cantilever hovers by only 25% or 50% of a vertical extension of the cantilever. In other words, a vertical distance between the facility ground and a lowest edge of the cantilever can amount to a quarter or half of the one vertical extension of the cantilever. Depending on the cantilever length, a weight of the beam and a weight of the gripper et cetera, different magnitudes for the bending of the cantilever are conceivable. Especially the free end section of the cantilever can be at risk of colliding with the facility ground. For this purpose, a supporting element, in particular a wheel, can be attached to the cantilever in order to prevent the cantilever from physically touching the facility ground and being damaged. The wheel can be rotatably connected to the end face of the cantilever, for instance by means of bolting, and support the cantilever and avoid excessive bending of the cantilever. In a preferred embodiment of the invention, the cantilever can be attached rotatably to a facility wall. Also, the wheel can promote pivoting motion of the cantilever.

According to an embodiment of the present invention, the cantilever comprises a further supporting element preferably a further wheel, that is rotatably connected to the first connecting end section, wherein the supporting element is guided by a second wall rail and the further supporting element is guided by the first wall rail, the first wall rail and the second wall rail being parallel to each other. Preferably, the cantilever is arranged perpendicular to the planting walls and the facility walls. Furthermore, and preferably, the cantilever extends from the first facility wall to the second facility wall. Each wheel can be rotatably connected to an end face of the cantilever, one end face being arranged at the first free end section and the other end face being arranged at the first connecting end section. That way, the cantilever can be supported bilaterally and bending can be restricted advantageously. Both wall rails can have a cross section similar to a U-like shape. In other words, the wall rails can be formed rectangularly, wherein a top side of the rectangle is open and directed upwardly, two sides extend vertically and serve as side panels for the wheels and a fourth/bottom side upon which the wheels can rest supports the wheels and thus carries the weight of the cantilever at least partially. Due to the open top side of the wall rails the wheels that are attached to the cantilever can be placed into the wall rails top-down.

In a preferred embodiment of the present invention, the beam comprises a shelf with a shelf surface, upon which plants and/or plant receptacles are placeable. Preferably, the shelf is directly connected to the beam. Particularly preferred is a shelf that comprises a horizontally arranged shelf surface. Trays, wherein a plurality of plants and/or plant receptacles can be stored, can be put on the shelf surface. Hence, the shelf can act as an interim storage plane. The proximity between the gripper and the shelf, both being connected to the beam, increases the efficiency of the system as the distance between the plants and their final position in the planting walls can be decreased. The higher efficiency can be attributed to the possibility that more plants can be inserted into the planting walls within a given time interval. Alternatively, the higher efficiency can be attributed to the further possibility that inserting a single plant into the planting wall takes less time since the path taken is shorter.

According to an embodiment of the present invention, the cantilever and the beam comprise respectively at least one individual drive unit enabling motion of the cantilever, the beam and the gripper. A multitude of drive units are conceivable for the parts to be moved. Furthermore, the employed drive units can comprise gears. A pivotable cantilever can be driven, for instance, by means of a worm drive. A linearly movable cantilever on the other hand can be driven by a linear drive, for instance with a ball screw drive. The gripper can be moved along the second guiding rail of the beam also by a linear drive. Alternatively, the gripper can be driven by an electric motor, meaning by using rotational movement, via belts or chains or ropes, comparable to common building elevators that enable controlled motion in two opposite directions along a vertical axis. Finally, the beam can be moved along the first guiding rail of the cantilever using a linear drive.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### Brief description of the drawings

- Figure 1a: illustrates schematically an embodiment of an inventive system for transporting a gripper in a vertical farming facility in a first perspective.
- Figure 1b: illustrates schematically the system and the vertical farming facility of figure 1a in a second perspective.
- Figure 2a: illustrates schematically the system picking a tray of plant receptacles and setting it on a shelf.
- Figure 2b: illustrates schematically the system of the figure 2a approaching the planting walls for inserting plant receptacles therein.
- Figure 2c: illustrates schematically the system of the figures 2a and 2b directly prior to inserting the plant receptacles.
- Figure 2d: illustrates schematically the system of the figures 2a, 2b and 2c while inserting a plant receptacle into a planting wall.
- Figure 3: illustrates a tray with two plant receptacles therein.
- Figure 4: illustrates a first embodiment of a gripper head in a release position.
- Figure 5a: illustrates schematically a second embodiment of the gripper head along with a plant receptacle and a plant therein in a release position in a side view.
- Figure 5b: illustrates schematically the gripper head of figure 5a along with a plant receptacle and a plant therein in a clamping position in a perspective view.

### Detailed description

The present invention will be described with respect to particular embodiments and with reference to certain drawings but the invention is not limited thereto but only by the claims. The drawings described are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described and/or illustrated herein.

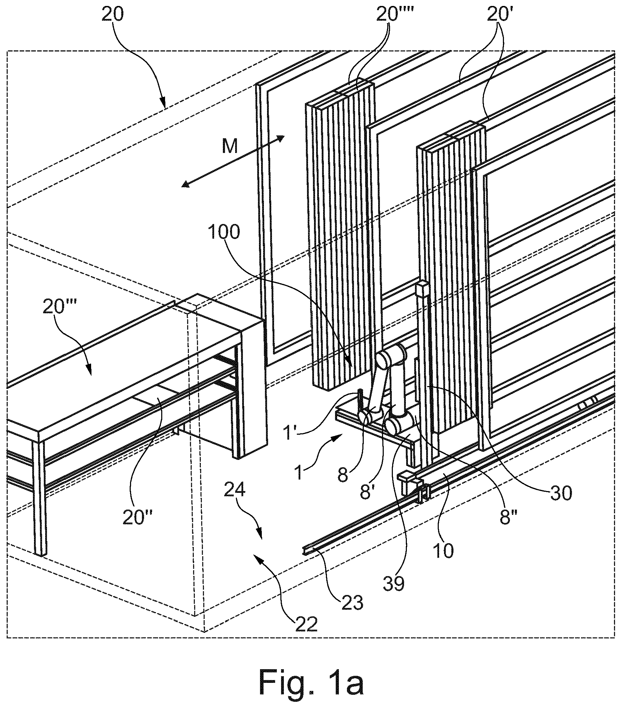

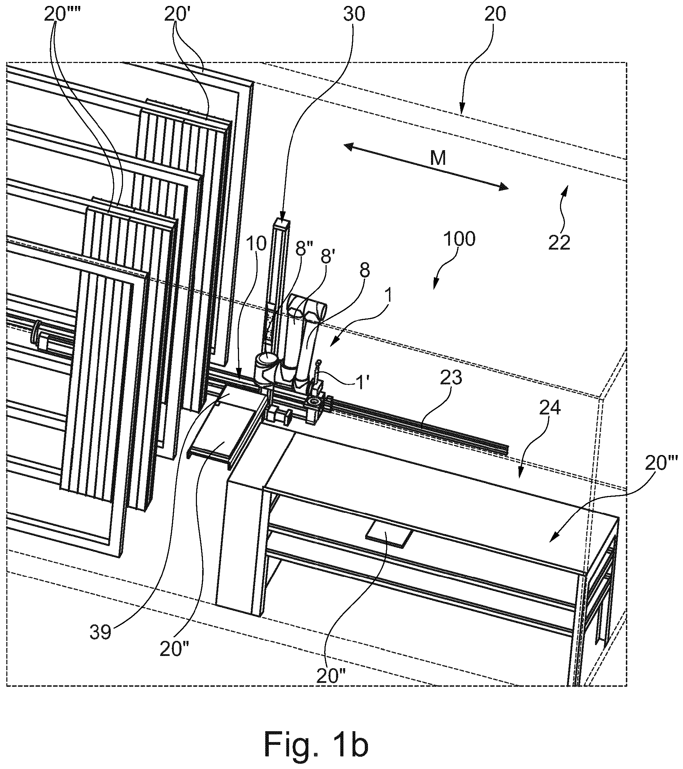

In **figure 1a** and **figure 1b****,** a system 100 for transporting a gripper 1 in a vertical farming facility 20 is illustrated in two different perspectives. The vertical farming facility 20 is a container, but, alternatively, the vertical farming facility 20 could also be a greenhouse.

The system 100 comprises a cantilever 10 that is arranged horizontally, parallel to a facility ground 24. The system 100 further comprises a beam 30 that is arranged vertically, perpendicular to the facility ground 24 and the cantilever 10. Furthermore, the system 100 comprises a gripper 1 for handling plants 2' and/or plant receptacles 2. The gripper 1 has five different components: a gripper head 1' for clamping and handling plants 2' and/or plant receptacles 2, an articulated arm 8 that is rotatably connected to the gripper head 1', a further articulated arm 8' that is rotatably connected to the articulated arm 8, a base member 8" that supports the further articulated arm 8' and finally a shelf 39. Therefore, the most distal component of the gripper 1 is the gripper head 1'. Analogously, the most proximal component of the gripper 1 is the base member 8".

The system 100, as shown in the figures 1a and 1b, is taken out of operation. In other words, the vertical farming facility 20 is shut down and the system 100 is in a parking position. More specifically, the system 100 is arranged within the vertical farming facility 20 such that it is positioned close to a first facility wall 22 and thus facilitates setting foot in and moving freely inside the vertical farming facility 20, for instance for potential activities like repair, maintenance or overhaul. In the parking position, the cantilever 10 is arranged parallel to a first facility wall 22, thereby taking up little space, in particular not protruding into a facility volume and obstructing the room inside the vertical farming facility 20.

The system 100 is connected to the first facility wall 22 of the vertical farming facility 20 via the cantilever 10. More explicitly, the cantilever 10 is connected indirectly to the first facility wall 22 by means of a first wall rail 23, the first wall rail 23 being fixed to the first facility wall 22 using bolting. The first wall rail 23 is formed straightly and also arranged parallel to the facility ground 24.

The figures 1a and 1b also depict a nursery station 20‴ that is located at an entrance of the vertical farming facility 20. The nursery station 20‴ resembles a workbench and comprises surfaces to set trays 20" thereon. For illustrative purposes, a single tray 20" is put on one of the surfaces of the nursery station 20‴. The trays 20" can comprise a multitude of plants 2' and/or plant receptacles 2. Furthermore, the nursery station 20‴ acts as a temporary storage means for the trays 20" prior to picking the trays 20" with plants 2' and/or plant receptacles 2 therein, setting them on the shelf 39, transporting them to planting walls 20' and finally inserting them into planting walls 20'.

The planting walls 20' are arranged parallel to each other and extend along a main length direction M of the vertical facility 20. They are equally shaped and sized and connected to the vertical farming facility 20 such that they hover. In other words, there is a vertical distance between the facility ground 24 and a lower edge of each planting wall 20'. Moreover, the planting walls 20' are configured movably. In the embodiment of the invention as depicted in all figures shown in this disclosure, the planting walls 20' are particularly movable translationally towards each other, while keeping parallelism. In other words, the planting walls 20' can be moved individually perpendicular to the first wall rail 23. But it is also conceivable to configure the planting walls 20' such that they are movable parallel to the first wall rail 23, the distance between the planting walls 20' remaining unchanged. Furthermore, other embodiments, wherein a combination of parallel and perpendicular motion of the planting wall 20' with respect to the first facility wall 22 or the first wall rail 23 is conceivable. Moreover, the planting walls 20' are covered on both sides with a foam material 20ʺʺ that enables simple and firm inserting of the plants 2' and/or plant receptacles 2 into the planting walls 20'. Grooves that are formed in the foam material 20ʺʺ are configured to accommodate the plants 2' and/or plant receptacles 2, wherein the grooves are positioned in an overlapping manner with respect to apertures in the planting walls 20', thereby ensuring that the plants 2' and/or plant receptacles 2 are plugged in to the foam material 20ʺʺ and the planting wall 20' at the same time. The grooves are arranged perpendicular to the facility ground 24 but they can be arranged parallel to the facility ground 24 as well. Also, a combination of perpendicular and parallel grooves is possible. Grooves can also be substituted by other types of openings in the foam materials 20"", such as circular, oval, rectangular or the like. In any case, the apertures in the planting walls 20' and the openings in the foam material 20ʺʺ are overlappingly arranged.

More features, structural attributes and detailed functionality of the system 100 will be further described in below mentioned figures in combination with the figures 1a and 1b.

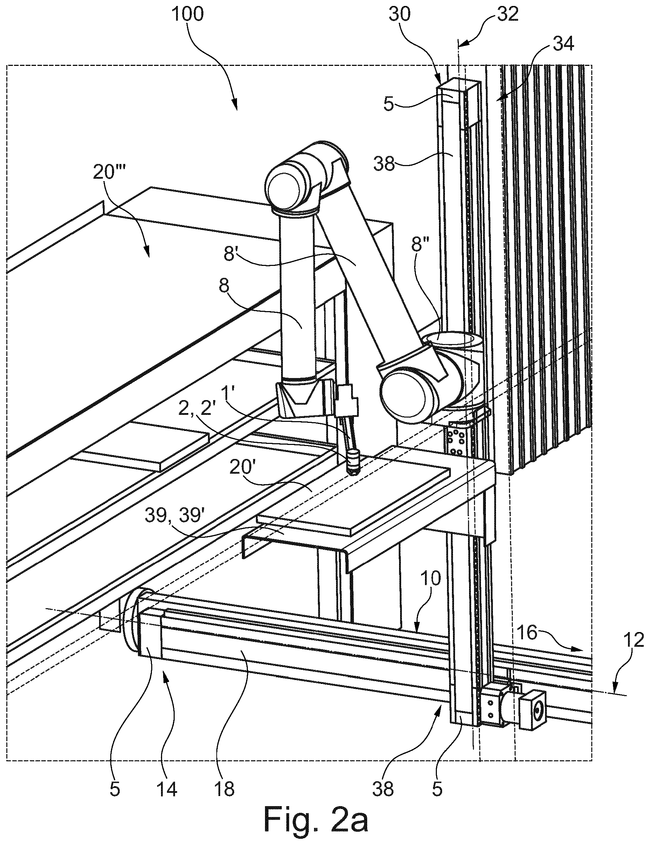

**Figure 2a** illustrates schematically the picking of a tray 20" - with plants 2' and plant receptacles 2 therein - by the system 100. For the sake of simplification and clarity, only one plant receptacle 2 with a plant 2' therein is visualized. In figure 2a, the gripper head 1' has taken a tray 20" and is in the process of putting it on the shelf 39. In order for the gripper head 1' to approach the nursery station 20‴ properly and pick the tray 20" without complications, a certain degree of movability and flexibility of the system 100 is required. In other words, movement of the system 100 around and along different spatial axes is necessary. For this purpose, the beam 30 can be moved bidirectionally along a first guiding rail 18 of the cantilever 10, wherein the first guiding rail 18 is arranged parallel to a cantilever axis 12. In other words, the beam 30 can be moved back and forth.

The beam 30 comprises a second free end section 34 and a second connecting and section 36. The connection between the cantilever 10 and the beam 30 occurs via the second connecting end section 36 of the beam 30. Furthermore, to ensure sufficient movability and/or flexibility of the system 100, the gripper 1 is movably connected to the vertically arranged beam 30 via the base member 8" and can be linearly driven bidirectionally along a beam axis 32. In other words, the gripper 1 can be moved up and down. The movement of the gripper 1 takes place along a second guiding rail 38.

Limiters 5 define start and end of the first and second guiding rails 18, 38. The limiters 5 are arranged at a first free end section 14 and first connecting end section 16 of the cantilever 10, as well as at the second free end section 34 and the second connecting and section 36 of the beam 30. They restrict the movement range of the beam 30 in the first guiding rail 14 and of the gripper 1 in the second guiding rail 38.

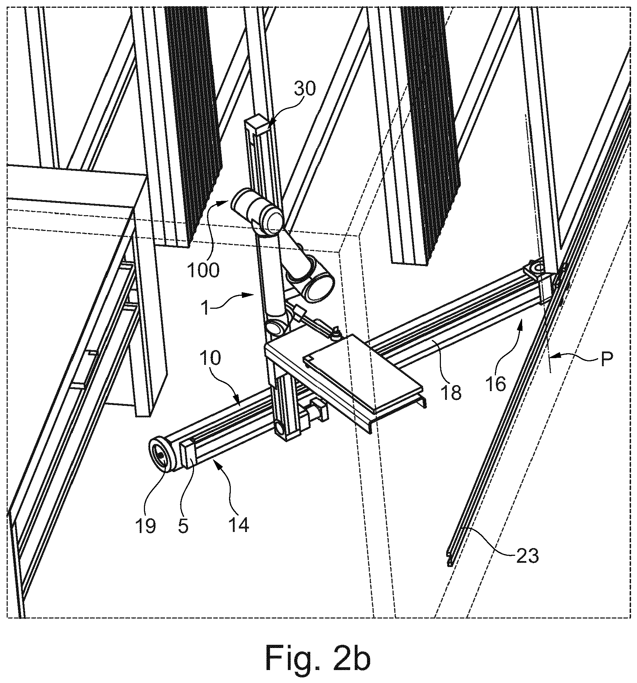

Once the system 100 picked the tray 20" and put it on a shelf surface 39', it can start transporting the tray 20" towards the planting walls 20'. In **figure 2b****,** the system 100 is shown, so to speak, on its way to the planting walls 20'. For this purpose, the beam 30 distances itself from the first free end section 14 by sliding along the first guiding rail 18 towards the first connecting end section 16 of the cantilever 10.

The embodiment of the cantilever 10 shown in the present figures has two degrees of freedom of movement. The cantilever 10 can be rotated around a pivoting axis P and also linearly moved along the first wall rail 23. The present embodiment of the cantilever 10 hovers, meaning that there is no physical contact between the facility ground 24 and the cantilever 10. The cantilever 10 can, in principle, be supported by a wheel 19 that is connected to the cantilever 10 at the first free end section 14, at least partially, against bending. However, if a combination of both types of motion are at hand, rotation and translation, a physical touch between the wheel 19 and the facility ground 24 could go along with too much friction, thereby impeding the motion of the cantilever 10.

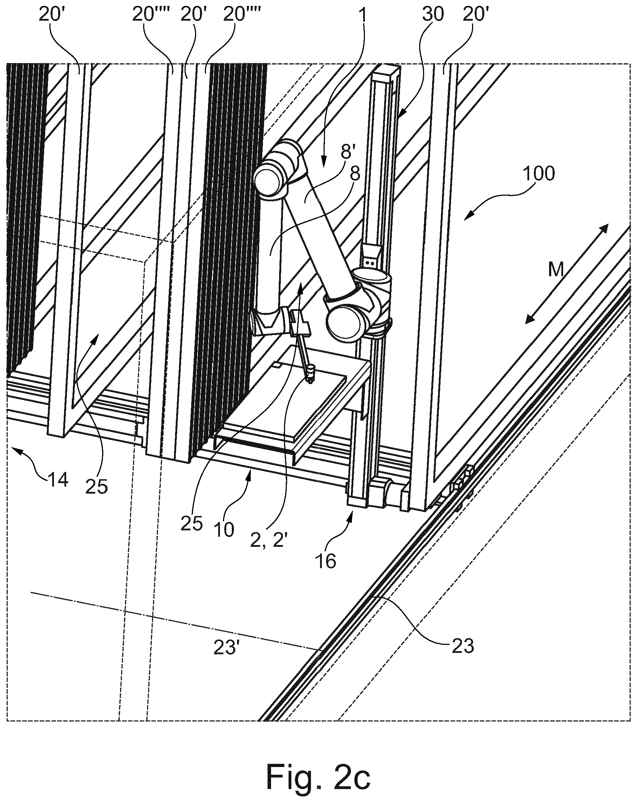

In **figure 2c****,** the system 100 is shown right before the inserting of plant receptacles 2 start. The gripper 1 is positioned at least partly in-between two planting walls 20', hereinafter called alleys 25. The gripper 1 is just about to take a plant receptacle 2 and insert it through the foam material 20ʺʺ into one of the adjacent planting walls 20'. The cantilever 10 is arranged perpendicular to the planting walls 20' and the first wall rail 23. The gripper 1 can serve different heights of the planting walls 20' firstly by sliding up along the beam 30 and secondly by stretching out using its articulated arm 8 and further articulated arm 8'. Since the beam 30 along with the gripper 1 is positioned in-between two planting walls 20', in an alley 25, two different walls 20' can be served with the system without having to move the beam 30 along the cantilever 10.

The cantilever 10 is arranged underneath the planting walls 20'. In other words, there is a vertical distance between the lowest edges of the planting walls 20' and the facility ground 24, wherein the said vertical distance is greater than a maximum height of the cantilever 10 so that the cantilever 10 can be freely moved beneath the planting walls 20' without collision.

The planting walls 20' extend along the main length direction M. In order to insert plant receptacles 2 with plants 2' therein into the planting walls 20' along the entire main length direction M, it suffices to move the cantilever 10 laterally in the direction of M. Once the two planting walls 20' on either side of the beam 30 are served completely with plants 2', the cantilever 10 moves back up to a starting position 23'. At the starting position 23', the beam 30 can be moved incrementally towards the first free end section 14 of the cantilever 10 without colliding with a planting wall 20' until the beam 30 reaches the next alley 25. If necessary, the planting walls 20' to be served next can be moved such that the beam 30 can be transported in the direction M, in-between the planting walls 20'. After having fully served the planting walls 20' at the current alley 25, the cantilever 10 can again move back to the starting position 23', the beam 30 can be further moved by a next increment towards the first free end section 14, only to start over in a next alley 25.

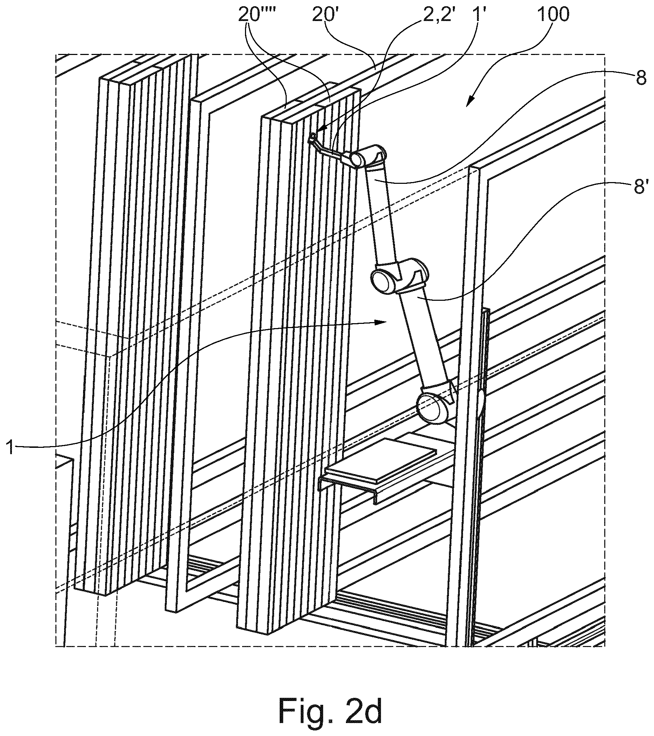

In **figure 2d****,** the system 100 is shown while depicting, exemplarily, a plant receptacle 2 with a plant 2' therein into a planting wall 20'. For this purpose, the gripper head 1' inserts the plant receptacle 2 through the foam material 20ʺʺ into the said planting wall 20', thereby mechanically fixing the plant receptacle 2 in the planting wall 20'. Advantageously, the plant receptacles 2 are inserted such that the plants 2' and/or plant receptacles 2 have an angle with respect to the planting wall 20' and/or foam material 20ʺʺ. Preferably, despite an eventual inclination, the plants 2' are at least partly directed to a ceiling of the vertical farming facility 20, where appropriate lighting devices are arranged for sufficient radiation of the plants 2' and therefore for successful cultivation.

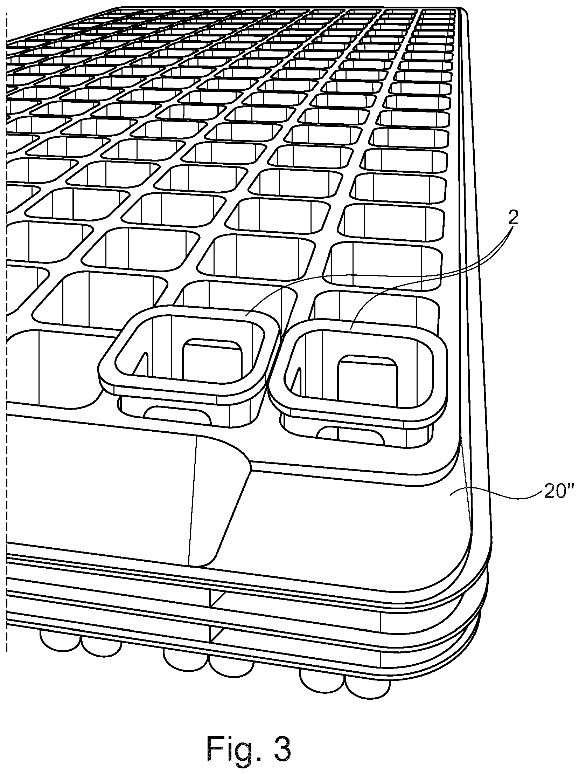

In **figure 3****,** an embodiment of the tray 20" is illustrated. Exemplarily, two plant receptacles 2 are arranged in the tray 20", where the tray 20" can be made of a same plastic as the plant receptacles 2. The sizes and geometries or the general three-dimensional design of the tray 20" and the plant receptacles 2 are matched to each other such that the plant receptacles 2 can be inserted in dedicated cavities in the tray 20" without much clearance. However, one imperative requirement with respect to the design of the tray 20" and plant receptacles 2 is a sufficient protrusion of the plant receptacles 2 beyond a topmost edge of the tray 20" in order for a gripper 1 or gripper head 1' to pick or seize unhinderedly and/or automatically the plant receptacles 2.

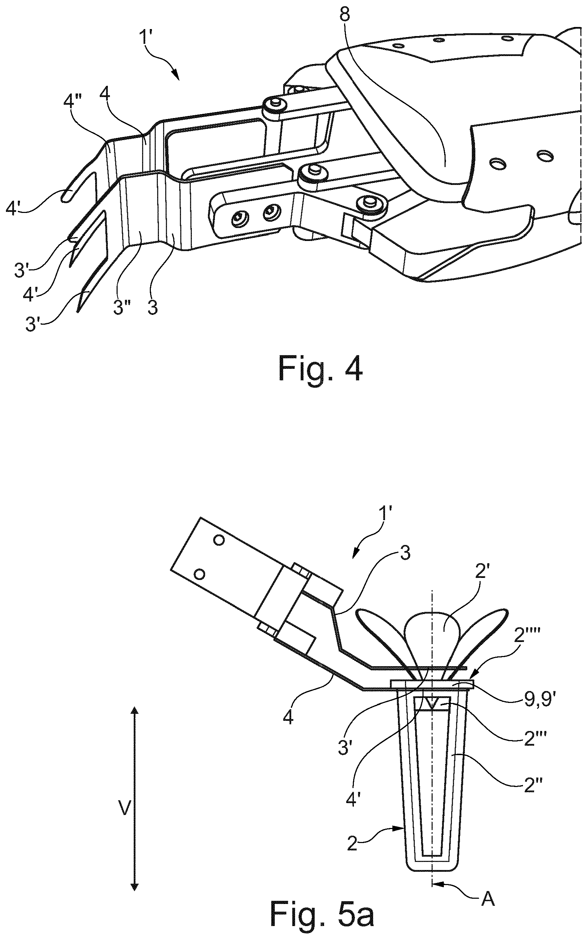

In **figure 4****,** a first embodiment of the gripper head 1' for handling plants 2' or plant receptacles 2 in a vertical farming facility 20 is illustrated. The gripper head 1' forms the most distal part of the gripper 1 and allows for a connection to plants 2' or plant receptacles 2 by means of movable constituents. More specifically, the gripper head 1' comprises a first gripping element 3 and a second gripping element 4. Both gripping elements 3, 4 are manufactured of sheet metal and curved and angled.

The first gripping element 3 comprises two first lateral holding arms 3', each first lateral holding arm 3' comprising a distal free end and a proximal end, the proximal ends being connected to an upper holding means 3". The first lateral holding arms 3' are spaced apart from and arranged parallel to each other. The free ends are at least partially tapered which facilitates positioning around plant receptacles 2.

Similarly, the second gripping element 4 comprises two second lateral holding arms 4', each second lateral holding arm 4' comprising a distal free end and a proximal end, the proximal ends being connected to a bottom holding means 4". The second lateral holding arms 4' are spaced apart from and arranged parallel to each other. The free ends are at least partially tapered which facilitates positioning around plant receptacles 2.

The gripping elements 3, 4 are widely alike in shape and size. They only differ in a single direction of bending. In other words, their manufacturing is almost entirely identical apart from a single manufacturing step. They are arranged parallel to each other and both are connected to the articulated arm 8 by means of two bolts. The articulated arm 8 is rotatably supporting the gripper head 1'.

In **figure 5a****,** the gripper head 1' according to a second embodiment is illustrated schematically in a side view. Also, a plant 2' that is arranged in a largely elongated plant receptacle 2 is depicted. A longitudinal axis A of the plant receptacle 2 is arranged parallel to a vertical direction V. The plant receptacle 2 comprises a base element 2" that is made of polyethylene but it is conceivable to employ other plastics as raw material for the production of the plant receptacle 2 as well. The base element 2" forms a cavity 2‴ at an inward direction of the base element 2" wherein - along with the plant 2' - a potting compost can be filled. The plant 2' is protruding at least partly beyond a head section 2ʺʺ of the plant receptacle 2. Furthermore, at each of four sides of the plant receptacle 2 one respective recess is formed to save material and hence weight and costs. Most importantly, recesses enable advantageously the provision of water or a water solution that comprises nutrients to the plant receptacle 2 and the potting compost. Moreover, a circumferential rim 9 is formed at the higher end, with respect to figure 5a, of the plant receptacle 2. The rim 9 comprises four rim portions 9', each rim portion 9' being arranged at one side of the base element 2". In addition, the rim 9 extends outwardly from all four sides of the base element 2" and is protruding the base element 2" laterally. The rim 9 or the rim portions 9' are arranged by and large perpendicular to the longitudinal axis A.

The gripper head 1' is shown in figure 5a in a release position, meaning that the first gripping element 3 and the second gripping element 4 are spaced apart from one another in the vertical direction V, wherein the first gripping element 3 is movably configured and serves as an upper gripping element, whereas the second gripping element 4 is non-movable and acts as a bottom gripping element. The wording release position refers in other words to the circumstance that the rim 9 is not clamped between the two first lateral holding arms 3' of the first gripping element 3 and the two second lateral holding arms 4' of the second gripping element 4. A gap is rather formed between the head section 2ʺʺ and the two first lateral holding arms 3' while the second lateral holding arms 4' support the rim 9 at two opposing sides of the plant receptacle 2, the second lateral holding arms 4' each supporting an individual rim portion 9'.

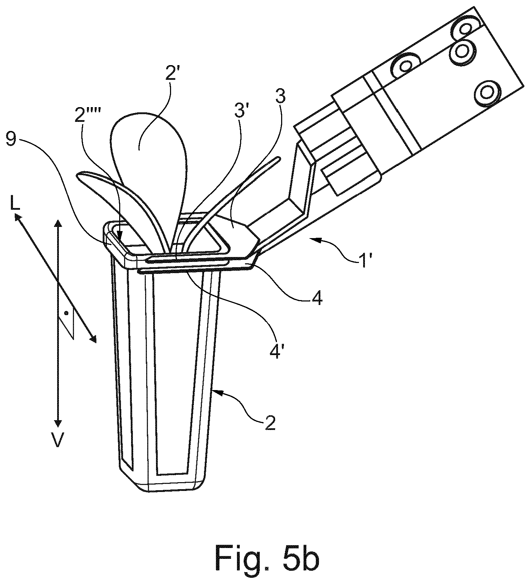

**In** **figure 5b****,** the arrangement depicted in figure 5a and comprising the gripper head 1' along with the plant receptacle 2 and plant 2' is illustrated in a perspective view. Furthermore, the entire arrangement is shown in a clamping position. While the second lateral holding arms 4' supported the two opposing rim portions 9' from below, the first lateral holding arms 3' moved downwards in the vertical direction V and in so doing clamped the rim 9. In figure 5b, the respective displacement of the holding arms 3' and 4' in a lateral direction L is obvious, the lateral direction L being perpendicular to the vertical direction V.

In such a clamped position the plant receptacle 2 in conjunction with the plant 2' can be transported by the gripper 1 to a targeted position within the range of motion of the gripper 1, particularly to the planting walls 20'.

### List of reference signs

- 1: Gripper
- 1': Working head, gripper head

- 2: Plant receptacle
- 2': Plant
- 2": Base element
- 2‴: Cavity
- 2ʺʺ: Head section

- 3: First gripping element
- 3': First lateral holding arm
- 3": Upper holding means

- 4: Second gripping element
- 4': Second lateral holding arm
- 4": Bottom holding means

- 5: Limiter

- 8: Articulated arm
- 8': Further articulated arm
- 8": Base member

- 9: Rim
- 9': Rim portion

- 10: Cantilever
- 12: Cantilever axis
- 14: First free end section
- 16: First connecting end section
- 18: First guiding rail
- 19: Supporting element, wheel

- 20: Vertical farming facility
- 20': Planting wall
- 20": Tray
- 20‴: Nursery station
- 20ʺʺ: Foam material
- 22: First facility wall
- 23: First wall rail
- 23': Starting position
- 24: Facility ground
- 25: Alley

- 30: Beam
- 32: Beam axis
- 34: Second free end section
- 36: Second connecting end section
- 38: Second guiding rail
- 39: Shelf
- 39': Shelf surface

- 100: System
- L: Lateral direction
- V: Vertical direction
- A: Longitudinal axis
- P: Pivoting axis
- M: Main length direction

## Claims

1. Vertical farming facility (20) comprising a system (100) for handling a working head (1'), wherein
- the system (100) comprises a cantilever (10) and a beam (30), the beam (30) being connected to the cantilever (10), wherein the cantilever (10) comprises a first free end section (14) and a first connecting end section (16),
- the cantilever (10) is arranged mainly horizontally and comprises a cantilever axis (12) and the beam (30) is arranged mainly vertically and comprises a beam axis (32),
- the cantilever (10) is movable within the vertical farming facility (20),
- a gripper (1) that comprises the working head (1') is movably connected to the beam (30) and configured to handle plants (2') and/or plant receptacles (2), wherein the vertical farming facility (20) comprises a first facility wall (22) to which the cantilever (10) is connected via the first connecting end section (16), wherein the cantilever (10) is
perpendicular and translationally movable with respect to the first facility wall (22), or
pivotably connected to the first facility wall (22).

2. Vertical farming facility (20) according to claim 1, wherein the beam (30) comprises a second free end section (34) and a second connecting end section (36), wherein the beam (30) is connected via the second connecting end section (36) to the cantilever (10).

3. Vertical farming facility (20) according to claim 2, wherein the cantilever (10) is connected to the first facility wall (22) by means of a first wall rail (23).

4. Vertical farming facility (20) according to one of the preceding claims, wherein the cantilever (10) comprises a first guiding rail (18) that is arranged parallel to the cantilever axis (12), the beam (30) being translationally movable along the first guiding rail (18).

5. Vertical farming facility (20) according to one of the preceding claims, wherein the beam (30) comprises a second guiding rail (38) that is arranged parallel to the beam axis (32), the gripper (1) being movable along the second guiding rail (38).

6. Vertical farming facility (20) according to one of the preceding claims, wherein the vertical farming facility (20) comprises, preferably vertically arranged, planting walls (20'), the planting walls (20') comprising grooves and/or openings wherein the plants (2') and/or plant receptacles (2) are insertable.

7. Vertical farming facility (20) according to claim 6, wherein the cantilever (10) is movable within a plane that is arranged beneath the planting walls (20').

8. Vertical farming facility (20) according to claim 6 or 7, wherein the planting walls (20') are individually movable, preferably along an axis parallel to the cantilever axis (12).

9. Vertical farming facility (20) according to claim 6, 7 or 8, wherein the beam (30) is at least partly transportable between the planting walls (20').

10. Vertical farming facility (20) according to anyone of the preceding claims, wherein the cantilever (10) comprises a supporting element (19), preferably a wheel (19), that is rotatably connected to the first free end section (14), the supporting element (19) supporting the cantilever (10), preferably with respect to a facility ground (24).

11. Vertical farming facility (20) according to claim 10, wherein the cantilever (10) comprises a further supporting element, preferably a further wheel, that is rotatably connected to the first connecting end section (16), wherein the supporting element (19) is guided by a second wall rail (25) and the further supporting element is guided by the first wall rail (23), the first wall rail (23) and the second wall rail (25) being parallel to each other.

12. Vertical farming facility (20) according to one of the preceding claims, wherein the beam (30) comprises a shelf (39) with a shelf surface (39'), upon which plants (2') and/or plant receptacles (2) are placeable.

13. Vertical farming facility (20) according to one of the preceding claims, wherein the cantilever (10) and the beam (30) comprise respectively at least one individual drive unit enabling motion of the cantilever (10), the beam (30) and the gripper (1).

## Patentansprüche

1. Vertikale Anbauanlage (20) mit einem System (100) zur Handhabung eines Arbeitskopfes (1'), wobei
- das System (100) einen Ausleger (10) und einen Träger (30) umfasst, wobei der Träger (30) mit dem Ausleger (10) verbunden ist, wobei der Ausleger (10) einen ersten freien Endabschnitt (14) und einen ersten Verbindungsendabschnitt (16) umfasst,
- der Ausleger (10) hauptsächlich horizontal angeordnet ist und eine Auslegerachse (12) aufweist und der Träger (30) hauptsächlich vertikal angeordnet ist und eine Trägerachse (32) aufweist,
- der Ausleger (10) innerhalb der vertikalen Anbauanlage (20) beweglich ist,
- ein den Arbeitskopf (1') aufweisender Greifer (1) mit dem Träger (30) beweglich verbunden ist und zum Handhaben von Pflanzen (2') und/oder Pflanzengefäßen (2) ausgebildet ist, wobei die vertikale Anbauanlage (20) eine erste Anlagenwand (22) aufweist, mit der der Ausleger (10) über den ersten Verbindungsendabschnitt (16) verbunden ist, wobei der Ausleger (10)
senkrecht und translatorisch in Bezug auf die erste Anlagenwand (22) beweglich ist, oder
schwenkbar mit der ersten Anlagenwand (22) verbunden ist.

2. Vertikale Anbauanlage (20) nach Anspruch 1, wobei der Träger (30) einen zweiten freien Endabschnitt (34) und einen zweiten Verbindungsendabschnitt (36) aufweist, wobei der Träger (30) über den zweiten Verbindungsendabschnitt (36) mit dem Ausleger (10) verbunden ist.

3. Vertikale Anbauanlage (20) nach Anspruch 2, wobei der Ausleger (10) mit der ersten Anlagenwand (22) mittels einer ersten Wandschiene (23) verbunden ist.

4. Vertikale Anbauanlage (20) nach einem der vorhergehenden Ansprüche, wobei der Ausleger (10) eine erste Führungsschiene (18) aufweist, die parallel zur Auslegerachse (12) angeordnet ist, wobei der Träger (30) entlang der ersten Führungsschiene (18) translatorisch bewegbar ist.

5. Vertikale Anbauanlage (20) nach einem der vorhergehenden Ansprüche, wobei der Träger (30) eine zweite Führungsschiene (38) aufweist, die parallel zur Trägerachse (32) angeordnet ist, wobei der Greifer (1) entlang der zweiten Führungsschiene (38) bewegbar ist.

6. Vertikale Anbauanlage (20) nach einem der vorhergehenden Ansprüche, wobei die vertikale Anbauanlage (20), vorzugsweise vertikal angeordnete, Pflanzwände (20') aufweist, wobei die Pflanzwände (20') Nuten und/oder Öffnungen aufweisen, in die die Pflanzen (2') und/oder Pflanzgefäße (2) einsetzbar sind.

7. Vertikale Farming-Anlage (20) nach Anspruch 6, wobei der Ausleger (10) in einer Ebene beweglich ist, die unterhalb der Pflanzwände (20') angeordnet ist.

8. Vertikale Anbauanlage (20) nach Anspruch 6 oder 7, wobei die Pflanzwände (20') einzeln beweglich sind, vorzugsweise entlang einer Achse parallel zur Auslegerachse (12).

9. Vertikale Farming-Anlage (20) nach Anspruch 6, 7 oder 8, wobei der Träger (30) zumindest teilweise zwischen den Pflanzwänden (20') verfahrbar ist.

10. Vertikale Anbauanlage (20) nach einem der vorhergehenden Ansprüche, wobei der Ausleger (10) ein Stützelement (19), vorzugsweise ein Rad (19), umfasst, das drehbar mit dem ersten freien Endabschnitt (14) verbunden ist, wobei das Stützelement (19) den Ausleger (10) vorzugsweise in Bezug auf einen Anlagenboden (24) abstützt.

11. Vertikale Anbauanlage (20) nach Anspruch 10, wobei der Ausleger (10) ein weiteres Stützelement, vorzugsweise ein weiteres Rad, aufweist, das mit dem ersten Verbindungsendabschnitt (16) drehbar verbunden ist, wobei das Stützelement (19) durch eine zweite Wandschiene (25) und das weitere Stützelement durch die erste Wandschiene (23) geführt ist, wobei die erste Wandschiene (23) und die zweite Wandschiene (25) parallel zueinander sind.

12. Vertikale Anbauanlage (20) nach einem der vorhergehenden Ansprüche, wobei der Träger (30) ein Regal (39) mit einer Regalfläche (39') aufweist, auf der Pflanzen (2') und/oder Pflanzgefäße (2) platzierbar sind.

13. Vertikale Anbauanlage (20) nach einem der vorhergehenden Ansprüche, wobei der Ausleger (10) und der Träger (30) jeweils mindestens eine einzelne Antriebseinheit aufweisen, die eine Bewegung des Auslegers (10), des Trägers (30) und des Greifers (1) ermöglicht.

## Revendications

1. Installation de culture verticale (20) comprenant un système (100) pour la manipulation d'une tête de travail (1'), dans laquelle
- le système (100) comprend un cantilever (10) et une poutre (30), la poutre (30) étant reliée au cantilever (10), le cantilever (10) comprenant une première section d'extrémité libre (14) et une première section d'extrémité de liaison (16),
- le cantilever (10) est disposé principalement horizontalement et comprend un axe de cantilever (12) et la poutre (30) est disposée principalement verticalement et comprend un axe de poutre (32),
- le cantilever (10) est mobile à l'intérieur de l'installation agricole verticale (20),
- une pince (1) comprenant la tête de travail (1') est reliée de manière mobile à la poutre (30) et configurée pour manipuler des plantes (2') et/ou des récipients pour plantes (2), dans laquelle l'installation de culture verticale (20) comprend une première paroi d'installation (22) à laquelle le cantilever (10) est relié par la première section d'extrémité de connexion (16), dans laquelle le cantilever (10) est
perpendiculaire et mobile en translation par rapport à la première paroi de l'installation (22), ou
relié de manière pivotante à la première paroi de l'installation (22).

2. Installation de culture verticale (20) selon la revendication 1, dans laquelle la poutre (30) comprend une deuxième section d'extrémité libre (34) et une deuxième section d'extrémité de connexion (36), dans laquelle la poutre (30) est reliée par la deuxième section d'extrémité de connexion (36) au cantilever (10).

3. Installation de culture verticale (20) selon la revendication 2, dans laquelle le cantilever (10) est relié à la première paroi de l'installation (22) au moyen d'un premier rail mural (23).

4. Installation de culture verticale (20) selon l'une des revendications précédentes, dans laquelle le cantilever (10) comprend un premier rail de guidage (18) qui est disposé parallèlement à l'axe du cantilever (12), la poutre (30) étant mobile en translation le long du premier rail de guidage (18).

5. Installation de culture verticale (20) selon l'une des revendications précédentes, dans laquelle la poutre (30) comprend un second rail de guidage (38) qui est disposé parallèlement à l'axe de la poutre (32), la pince (1) étant mobile le long du second rail de guidage (38).

6. Installation de culture verticale (20) selon l'une des revendications précédentes, dans laquelle l'installation de culture verticale (20) comprend, de préférence disposées verticalement, des parois de plantation (20'), les parois de plantation (20') comprenant des rainures et/ou des ouvertures dans lesquelles les plantes (2') et/ou les récipients à plantes (2) peuvent être insérés.

7. Installation de culture verticale (20) selon la revendication 6, dans laquelle le cantilever (10) est mobile dans un plan disposé sous les murs de plantation (20').

8. Installation de culture verticale (20) selon la revendication 6 ou 7, dans laquelle les murs de plantation (20') sont individuellement mobiles, de préférence le long d'un axe parallèle à l'axe du cantilever (12).

9. Installation de culture verticale (20) selon la revendication 6, 7 ou 8, dans laquelle la poutre (30) est au moins partiellement transportable entre les murs de plantation (20').

10. Installation de culture verticale (20) selon l'une quelconque des revendications précédentes, dans laquelle le cantilever (10) comprend un élément de support (19), de préférence une roue (19), qui est reliée de manière rotative à la première section d'extrémité libre (14), l'élément de support (19) supportant le cantilever (10), de préférence par rapport à un sol d'installation (24).

11. Installation de culture verticale (20) selon la revendication 10, dans laquelle le cantilever (10) comprend un autre élément de support, de préférence une autre roue, qui est reliée de manière rotative à la première section d'extrémité de connexion (16), dans laquelle l'élément de support (19) est guidé par un deuxième rail mural (25) et l'autre élément de support est guidé par le premier rail mural (23), le premier rail mural (23) et le deuxième rail mural (25) étant parallèles l'un par rapport à l'autre.

12. Installation de culture verticale (20) selon l'une des revendications précédentes, dans laquelle la poutre (30) comprend une étagère (39) avec une surface d'étagère (39'), sur laquelle les plantes (2') et/ou les récipients à plantes (2) peuvent être placés.

13. Installation de culture verticale (20) selon l'une des revendications précédentes, dans laquelle le cantilever (10) et la poutre (30) comprennent respectivement au moins une unité d'entraînement individuelle permettant le mouvement du cantilever (10), de la poutre (30) et de la pince (1).
